# EUROPEAN PATENT APPLICATION

(11) **EP 2 985 063 A1**
(43) Date of publication of application: **17.02.2016**
(21) Application number: 14181200.8
(22) Date of filing: 15.08.2014
(51) Int. Cl.: B01D 19/00, B01L 3/00

(54) **Device for separating bubbles from a fluid**

(71) Applicant: Carpegen GmbH, 48149 Münster (DE); Systec Elektronik und Software GmbH, 48161 Münster (DE)
(72) Inventor: HEITMANN, Jens, 48161 Münster (DE); JOBST, Annette, 45892 Gelsenkirchen (DE)
(74) Representative: von Renesse, Dorothea

(57) **Abstract**

A device for separating bubbles from a fluid comprising a chamber through which a fluid can pass. According to the invention the device is characterized in that the inner chamber wall has a geometry that generates within said chamber a continuous flow and at least one area with a discontinuous flow which has a low flow velocity so that bubbles remain at the inner chamber wall in said area and thus are separated from the fluid flowing out from the chamber.

## Description

### FIELD OF INVENTION

The present invention relates to a device and a method for separating bubbles from a fluid, in particular in fluidic systems, more particular in microfluidic systems. The invention furthermore relates to the field of "lab-on-a-chip" (LOC) technology suitable for point-of-care applications.

### BACKGROUND OF THE INVENTION

Point-of-care testing (POCT) represents near-patient laboratory diagnostics, i.e. diagnostics that is not performed in a central laboratory, but e.g. in a hospital, in a practice of a medical practitioner or in a pharmacy. POCT is also possible at home or in ambulances. In a broader sense, the POCT is used for analytical methods also in other application areas, such as in the food and environmental analysis.

Devices for POC testing are often based on microtechnical systems, in particular lab-on-a-chip systems. A lab-on-a-chip (LOC; or microchip) integrates one or several laboratory functions on a single device, e.g. a chip. Typically, LOC systems represent microfluidic systems, that means that fluid volumes of microliters, even down to less than picoliters, are moved, reacted, measured etc. in channels of few nanometers or micrometers in diameter.

In microfluidic systems bubble formation within the fluid constitute a major concern. Bubbles can impact on the flow characteristics of the fluid, e.g. they can partially or totally block the conduits or disturb in various other ways the accuracy of measurements of the fluid, e.g. the determination of the fluid volume, or the optical evaluation of a sample due to scattering effects or the like.

Bubble formation within a fluid can be due to gas components, for example oxygen or nitrogen dissolved therein. Often, the sample, reagents etc. used in a LOC is stored ahead of time before its use at low temperature. Then it is warmed just before the measurement. With increasing temperature the saturation solubility of the gas component dissolved in the sample decreases and gas bubbles are generated. Further, as an example gas bubbles can be generated by heating water above the boiling point or by dissolution of freeze-dried or lyophilized reagents. The generation of gas bubbles by freeze-dried reagents results from the porous structure of these reagents in which air is included. The air remains after dissolution as bubble or bubbles in the fluid.

Various solutions have been proposed how to prevent these bubbles from hampering measurements in LOC systems. One possibility is to remove the bubbles from the fluid or retain them in distinct areas of the LOC, therewith avoiding the contact of the bubbles to sensitive elements, such as optical systems or electrodes. Such means are known to the skilled person as "bubble traps".

A complex bubble trap is described in EP 1 855 114 A1. This bubble trap is disposed on the inner surface of a microchannel. The trapped bubbles will come into contact with each other and tend to grow into large bubbles. Furthermore EP 1 855 114 A1 refers to a bubble trap which traps not only bubbles present in the liquid flow, but part of the gas present in the microchannel is not pushed out by the liquid and stays instead as bubbles on a part of the inner surface of the microchannel. These bubbles, already present at a part of the inner surface of the microchannel can readily grow by adsorbing bubbles present in the liquid. Said bubble traps, however, require the bubbles to collapse and therewith to form large bubbles. The formation of large bubbles is energetically preferred, i.e. small bubbles try to reduce their surface by collapsing to larger bubbles. Consequently, this system has constrains when fluids are used within the microfluidic system, that generate stable foam, i.e. when small bubbles do not coalesce to larger entities but remain a plurality of small bubbles. Such foams are typically formed if the fluid contains surface active substances. The surface active substances reduce the interfacial tension between the gas and the fluid so that the bubbles are stabilized and do not coalesce. The bubble traps disclosed in EP 1 855 114 A1, which basically rely on the coalescence of minor bubbles to large bubbles, thus have a limited efficacy.

Accordingly, the present invention aims at providing a bubble trap which enables an improved separation of bubbles from a fluid even if the fluid contains an effective amount of a surface active substance.

### SUMMARY OF THE INVENTION

This object is solved by a bubble trap according to claim 1 and a fluidic system, in particular a lab-on-a-chip system, including this bubble trap. Preferred embodiments of the present invention are subject to the respective dependent claims. Furthermore, a method is suggested which allows for an easy and inexpensive separation of gas bubbles from a fluid.

According to the invention a device for the separation of gas bubbles from a fluid (bubble trap) is provided which comprises a chamber and conduits guiding the fluid to and off said chamber (afferent and efferent conduit, respectively), whereas the geometry of the inner wall of the chamber, is so designed that a continuous flow is generated within the chamber and at least one area with a discontinuous flow, so that bubbles remain in this area at the inner chamber wall and thus are separated from the fluid effusing from the chamber.

According to the invention the reduction of the flow velocity (speed) in the discontinuous flow has to reach a level, where the absorptive forces of the bubbles to the inner wall are higher than the forces which drag the bubbles into the effusing flow. Under these circumstances at least a part of the bubbles, preferably at least the majority of the bubbles in the fluid, remain at least for a certain period of time at the inner wall of the chamber while the fluid continues to flow through and then off the chamber. Therewith the bubbles are separated from the effusing flow. Hence separation of bubbles in the context of the invention means any at least temporary discontinuation of the flow of the bubbles through the chamber.

The required speed reduction in the discontinuous flow compared to the continuous flow can depend *inter alia* from the nature of the fluid and the gas components as well as from the surface structure and material of the inner wall of the chamber. The skilled person, however, can use routine measures to identify the most efficacious speed reduction in the discontinuous flow compared to the continuous flow and the measures to reach the desired speed reduction.

With its geometry the chamber according to the invention can generate at least one area with a laminar flow and at least one area with a chaotic flow. The term "chaotic flow" with regard to the invention encompasses a complex laminar flow, chaotic laminar flow or even a turbulent flow. Preferably the discontinuous flow comprises the chaotic flow and the continuous flow is laminar. Within the region of the chaotic flow at least one area or spatial region (volume) of "dead water" where the flow of the fluid slows down almost to a still stand is generated. Preferably a region of "dead water" is adjacent to continuous flow with high velocity. Preferably the region of "dead water" is adjacent an inner wall of the chamber. The generation of at least one region with low velocity (region of "dead water") adjacent to continuous flow with high velocity does enable that bubbles can be directed into these regions and in case that these regions are adjacent (preferably in contact with) an inner wall, the bubbles remain at the inner wall.

The at least one area with the discontinuous flow and/or the chaotic flow within the chamber preferably are obtained if the chamber comprises at least one cross section which exceeds the cross section of the afferent and/or efferent conduit, preferably the afferent conduit. The chamber preferably comprises a sequence of two or more distinct cross sections. Cross section in the context of the invention means a cross section perpendicular to the continuous flow.

In the plan view the chamber preferably comprises at least one plane with boundaries (inner walls, preferably side or lateral walls) that comprise at least one non-linear section. In this embodiment, hence, this plane preferably comprises at least one section with a curve (curvature). Preferably the afferent and/or efferent conduits share this at least one plane. A connection line which extends through the chamber and connects the afferent and efferent conduit can be a straight line, a curved line or a polygonal spline. In the plan view, the chamber can comprise a sequence of distinct planes, which may be different in size and/or shape. However, the chamber can extend perpendicular to the plan view with identical planes.

According to the invention at least one section of the chamber can have complex three-dimensional geometry, in particular based on bowls, cones, cylinders, torus or a combination thereof. In a preferred embodiment the chamber comprises at least one section with an asymmetric geometry with respect to the axis represented by the continuous flow within this section. In another preferred embodiment the chamber comprises at least one section with a symmetric geometry with respect to the axis represented by the continuous flow within this section.

The device according to the invention is particularly suitable as a bubble trap in a fluidic, especially microfluidic system. Hence one aspect of the invention is a microfluidic system comprising a bubble trap according to the invention. This system preferably is a ready-to-use system, i.e. it is pre-filled at least with one or with all reagents required for a sample analysis. In a particular embodiment at least one of these reagents is a surface active substance (surfactant), in particular a protein, such as albumin or an enzyme, in particular a DNA polymerase. In a particular embodiment some or all of the reagents are reagents which are required for PCR (polymerase chain reaction) or real-time PCR and one of the reagents is a surface active substance.

Preferably the ready-to-use device contains a lyophilizate.

The microfluidic system, in particular when provided as a ready-to-use-system, preferably is a disposable, i.e. it is disposed after use.

### DETAILED DESCRIPTION OF THE INVENTION

As outlined above according to one aspect of the invention a chamber is provided that comprises a geometry which generates a fluidic flow with at least one area with a continuous flow and at least one area with a discontinuous flow. According to this aspect of the invention the chamber geometry hence generates at least one area with a laminar flow and at least one area with a chaotic flow. The flow velocities within the chamber can vary.

In the context of the invention a chamber is any cavity within the fluidic system whose inner wall comprises at least one dimension perpendicular to the continuous flow which is bigger with regard to the respective extension of the afferent conduit in this direction.

According to the invention the term "continuous flow" is defined as a flow which does not comprise a stall. The term "discontinuous flow" according to the invention is defined as a flow that comprises a stall which preferably is generated by chaotic flow caused by the geometry of the chamber. The stall (spatial region of "dead water") is preferably in contact with an inner wall.

The geometry of the chamber preferably generates areas of different flow velocities, in particular at least one area with a high flow velocity and at least one area with a low flow velocity. Preferably, the continuous flow comprises the area with a high flow velocity and the discontinuous flow comprises the area with a low flow velocity, which is preferably adjacent or in contact with an inner wall of the chamber.

In one particular embodiment of the invention the ratio of flow velocity of the continuous flow and the flow velocity of the discontinuous flow is at least 2 to 1, preferred at least 5:1, more preferred at least 10:1, more preferred at least 15:1, more preferred at least 25:1, even more preferred at least 35:1 and most preferred at least 50:1.

In a particular embodiment the flow velocity of the continuous flow is in the range between about 1 mm/s and about 20 mm/s. The velocity of the continuous flow is at least 1 mm/s, more preferred at least 5 mm/s, even more preferred at least 7 mm/s and most preferred at least 10 mm/s with regard to a water based fluid. The maxima flow velocity preferably is 25 mm/s. The flow velocity of the discontinuous flow can be not more than 1 mm/s, preferred not more than 0.7 mm/s and most preferred not more than 0.5 mm/s. In a most preferred embodiment the flow velocity of the discontinuous flow is approximately 0 mm/s or even 0 mm/s. Preferably such areas of high and low flow velocity are adjacent to each other. The term adjacent in this context means that a difference in velocity Δv is obtained in a distance Δx which leads to Δv/Δx is in the region between 5mms⁻¹/mm and 25mms⁻¹/mm, preferred in the region between 10 mms⁻¹ / mm and 20 mms⁻¹ / mm and most preferred in the region between 12 mms⁻¹ / mm and 15 mms⁻¹ / mm.

In one embodiment of the invention, the percental size of the at least one area within the chamber with a discontinuous flow or a low flow velocity, respectively, with respect to the entire chamber is at least 1%, preferred at least 5%, more preferred at least 10%, and most preferred at least 20%.

In yet another aspect of the invention the ratio of the cross sectional area of the afferent or efferent conduit at the entry and exit of the chamber, respectively, in particular of the afferent conduit, and the largest cross sectional area of the chamber is at least 1:2, preferred at least 1:10, more preferred at least 1:25, even more preferred at least 1:50. Preferably, the chamber geometry comprises a sequence of at least 2, preferred at least 5, more preferred at least 10 distinct cross sections. A sequence of varying cross sections of the chamber can support the generation of distinct flow velocities and therewith the formation of a continuous/discontinuous flow.

The cross sectional area of the chamber may have any shape, for example square, trapezoidal, rectangular, polygonal, circular, elliptical or any combinations thereof. The term "circular" comprises all shapes with curved boundaries, in particular circles, ovals (ellipses), hyperbola shapes as well as parabola shapes.

The conduits, in particular the afferent and/or efferent conduits of the chamber, preferably are microchannels. A microchannel is a channel with a cross sectional diameter of less than 5 mm, preferably less than 3 mm, most preferred less than 1 mm.

There are no restrictions to the cross sectional size or shape of the conduit. The cross sectional area of the conduit can be e.g. about 0.01 mm² to about 4.0 mm², preferably about 0.15 mm² to about 1.5 mm², most preferred about 0.2 mm² to about 0.7 mm². The conduit may have a uniform cross sectional shape and/or size, but its shape and size may also vary.

The chamber according to the invention comprises in at least one plan view one plane with boundaries that comprises at least one non-linear section. Non-linear for example is circular or elliptical. The non-linear section may be at least a section of a circle, curvature or arc, a convex bulge, a concave bulge etc.

The non-linear section of the plan view of the chamber can be based on circular shapes, in particular circles or ovals, or any other non-linear shapes or combinations thereof. Preferably the non-linear section is composed of non-linear shapes. A figure being "composed of" non-linear shapes means that this figure can be constituted (described) by non-linear shapes, either side-by-side or overlapping. However, in the region of the afferent and/or efferent conduit the plan view of the chamber may comprise linear sections.

In a preferred embodiment the inner wall of the chamber adjacent the afferent conduit can include an angle of smaller than 90° with the afferent conduit. This geometry provides a discontinuity at the inlet of the chamber via which a discontinuous flow with a "dead water" region can be obtained.

The at least one plan view of the chamber can be composed of non-linear and linear sections. In a particularly preferred embodiment the plan view is composed of non-linear sections. In a specific embodiment of the invention the chamber comprises only plan views with non-linear sections, i.e. all planes of the chamber are composed of non-linear sections only.

If circles are suitable to describe the geometry of a plane (either side by side or overlapping, cf. *supra),* the circles can either have the same radius or different radii. In a preferred embodiment the radius of the circle is less than 10 mm, preferably 5 mm, most preferred from 0.5 mm to 1.7 mm.

In a preferred embodiment of the invention at least two overlapping circular shapes, in particular circles, describe the at least one plane of the non-linear section of the chamber. The distance between the center of one circular shape to another circular shape can be from 0.1 mm to 2 mm, preferably 0.3 mm to 1.5 mm, more preferred 0.3 mm to 1 mm. If more than two circular shapes can be used the distances between the respective centers can be identical or they can be distinct.

The center of the circular shape, in particular circles, can fall onto an axis or a channel that extends between the afferent and efferent conduit of the chamber. However, in a preferred embodiment of the invention the center of the circular shape is outside this channel. The distance between the center of the circle and the axis can 2 mm or less, in particular between 0.1 mm to 1.5 mm, more particular between 0.1 mm and 1 mm.

In the plan view of the chamber the circular shape(s) or circular section can extend on one or on both sides of the chamber. The circular shape(s) can be arranged asymmetrically or symmetrically with respect to the axis stretching between afferent and efferent conduits. Preferably the circular shape or, respectively, the shapes can be arranged asymmetrically. In another preferred embodiment the circular shape or, respectively, the shapes can be arranged symmetrically.

In another aspect of the invention the at least one section of the chamber can have a three-dimensional geometry, which is based on non-linear (i.e. curved) three-dimensional bodies. Preferably, they represent non-cubic bodies, such as bowls, cones, cylinders, torus, etc. or a combination thereof. Bodies which are composed of two or more torus, preferably with distinct diameters are preferred. Another preferred embodiment is a section which is composed of bowls. These rings or bowls can overlap. In a most preferred embodiment the chamber is based on a cylinder. The cylinder preferably has an irregular shape.

Most preferred the three-dimensional geometry of the chamber is based on two or more, in particular three or more, more particular five or more adjacent cylinders with a circular cross section. These cylinders can have different volumes or the same volume; preferably they have the same volume. The cylinders may overlap or are arranged side by side; preferably they overlap. The cylinders can be arranged asymmetrically with respect to the axis extending from the afferent to the efferent conduit in a preferred embodiment. In another preferred embodiment the cylinders can be arranged symmetrically with respect to the axis extending from the afferent to the efferent conduit. In the plan view the cylinders may be arranged on both sides of the axis.

The volume of the chamber can be not more than 150 mm³, preferred not more than 70 mm³ and most preferred not more than 25 mm³. In a most preferred embodiment the volume of the chamber can be 5 mm³ to 25 mm³.

In yet another aspect of the invention a fluidic, especially microfluidic system, in particular a lab-on-a-chip (LOC) system, is provided that comprises the above chamber. In one embodiment, the LOC can be pre-filled at least with one or with all reagents required for the sample analysis. Preferably at least one of these reagents is a surface active substance, i.e. a protein, such as albumin or an enzyme, such as DNA polymerase. More preferably these reagents are used to perform a PCR reaction. Preferably the chamber is pre-filled with a reagent, in particular with a lypophilized reagent.

The term "lyophilizate" or "lyphophilized reagent" according to the invention is the product of freeze-drying. The dissolution process of the lyophilizates often leads to the formation of bubbles. In particular, the dissolution process of the lyophilizates often leads to the formation of stable foam, if the lyophilizates contain at least one surface active substance.

The chamber according to the invention can be manufactured by milling, lasing, casting, lithographic printing, three-dimensional printing, injection molding, joining technologies/processes, ultrasonic sealing, UV adhesive, solvent jointing, etc. Furthermore the chamber according to the invention can be made by material selected from the list consisting of PET (polyethylene terephthalate), PDMS (polydimethylsiloxane), PMMA (polymethyl methacrylate), PC (polycarbonate), PEEK (polyether ether ketone), PP (polypropylene), PS (polystyrene), PVC (polyvinyl chloride), polysiloxane, allyl ester resin, cyclo-olefin polymer, silicon rubber, and other organic compounds, and silicon, silicon oxide films, quartz, glass, ceramic and other inorganic compounds.

In another particular embodiment the bubble trap according to the invention does not require an external power supply, e.g. current, voltage, pressure, etc., in order to separate bubbles from the fluid. Hence the bubble trap according to the invention is "passive".

In yet another aspect of the invention a method for separating bubbles from a fluidic sample according to the invention is provided. This method comprises the steps of transferring the sample through a bubble trap which is connected to an analyzing device, wherein a continuous flow and at least one area with a discontinuous flow (preferably comprising regions of dead water) of the sample is formed in the bubble trap, wherein bubbles are retained from the sample flowing out the bubble trap, wherein the bubbles are adsorbed at the inner wall of the bubble trap in the area of the discontinuous flow. In a preferred embodiment the method may comprise the step of contacting the sample with a cartridge which is part of a lab-on-a-chip system. Especially a device described above can be used to carry out the method.

The foregoing descriptions as well as the following description of exemplary embodiments do not represent a waiver of certain embodiments or features.

### FIGURES

The invention will be explained in further detail with reference to specific embodiments as shown in the drawings, in which
- Fig. 1: shows a device according to the invention in a first embodiment, wherein Fig. 1 a is a plan view and Fig. 1b is a perspective view;
- Fig. 2: shows a plan view of a device according to the invention in a second embodiment;
- Fig. 3: shows a plan view of different geometries of a device according to Fig. 2; and
- Fig. 4: shows the devices of Fig. 1 and Fig. 2 arranged on a lap-on-a-chip system.

### EXAMPLES

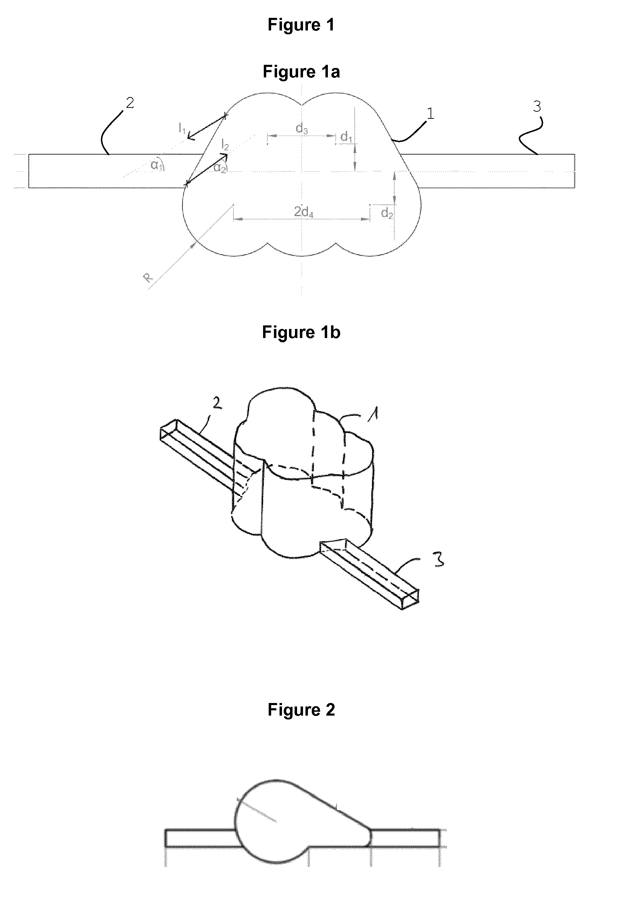

Fig. 1 shows a first embodiment of a device for separating bubbles from a fluid according to the invention. To carry out the experimental study polycarbonate chips with various chamber geometries were fabricated by milling. The chips consist of two half shells, which are both structured as due to the height of the cartridge as half shells from 2 mm, furthermore the chamber is divided between the two half-shells.

Fig. 1a shows a plan view of a chamber 1 and an afferent conduit 2 and an efferent conduit 3, whereas Fig. 1b shows a perspective view of the chamber 1 and the afferent conduit 2 and the efferent conduit 3. The width of the afferent and the efferent conduit 2, 3 in Fig. 1 to 4 is 0.5 mm.

A ramp at the inlet and outlet of the chamber can be added, so that no liquid remains standing in this chamber. Behind each chamber is a pentagonal viewing chamber which has a volume of 10 µl. The viewing chamber is laid out flat with a height of 1 mm, so that the bubbles, forwarded from the chamber, lie approximately in a plane, and can be well observed.

For the variation of the device mainly the radii of the circular shapes are changed. This is accompanied by a change in size of the entire chamber which has the overall shape of cloud with respect to a plan view. Furthermore, two different forms of the side walls are being tested at input and output (respectively afferent and efferent conduit) of the structure. Table 1 gives an overview of possible geometries. Here, R is the radius of the circular shapes, d₁ and d₂ are the distance between the center of one circular shape to the center of the conduit, d₃ and d₄ are the distance between the center of one circular shape to another circular shape, both lying on the same axis, alpha₁ (α₁) and alpha₂ (α₂), and I₁ and I₂ are the dimensions of the splines, which lead to two different forms of the side walls.

**Table 1: Examples for possible geometries of the first embodiment**

| **Example** | **R [mm]** | **d₁ [mm]** | **d₂ [mm]** | **d₃ [mm]** | **d₄ [mm]** | **alpha₁ [°]** | **alpha₂ [°]** | **I₁ [mm]** | **I₂ [mm]** |
|---|---|---|---|---|---|---|---|---|---|
| **1** | 0.7 | 0.6 | 0.7 | 1.0 | 1.0 | 60 | 50 | 1.0 | 1.5 |
| **2** | 0.9 | 0.4 | 0.5 | 1.0 | 1.0 | 60 | 50 | 1.0 | 1.5 |
| **3** | 0.8 | 0.9 | 1.0 | 1.5 | 1.5 | 60 | 50 | 1.0 | 1.5 |
| **4** | 1.0 | 0.7 | 0.8 | 1.5 | 1.5 | 60 | 50 | 1.0 | 1.5 |
| **5** | 1.2 | 0.5 | 0.6 | 1.5 | 1.5 | 60 | 50 | 1.0 | 1.5 |
| **6** | 1.4 | 0.3 | 0.4 | 1.5 | 1.5 | 60 | 50 | 1.0 | 1.5 |
| **7** | 0.7 | 0.6 | 0.7 | 1.0 | 1.0 | 90 | 50 | 1.0 | 1.5 |
| **8** | 0.9 | 0.4 | 0.5 | 1.0 | 1.0 | 90 | 50 | 1.0 | 1.5 |
| **9** | 0.8 | 0.9 | 1.0 | 1.5 | 1.5 | 90 | 50 | 1.0 | 1.5 |
| **10** | 1.0 | 0.7 | 0.8 | 1.5 | 1.5 | 90 | 50 | 1.0 | 1.5 |
| **11** | 1.2 | 0.5 | 0.6 | 1.5 | 1.5 | 90 | 50 | 1.0 | 1.5 |
| **12** | 1.4 | 0.3 | 0.4 | 1.5 | 1.5 | 90 | 50 | 1.0 | 1.5 |

Chip half shells were joined by Silpuran 4200, wherein Silpuran is a registered trademark and refers to silicone rubber compounds. The devices of the first embodiment are open upward so that the lyophilizates can be introduced here. In the experiments, each device was loaded with two lyophilizates. One of the beads contains the primer and the other all the remaining reagents. The lyophilized compositions comprise the following components:

| **No.** | **Component** |
|---|---|
| 1 | Buffer |
| 2 | Salt |
| 3 | Albumine |
| 4 | dNTPs |
| 5 | Primer |
| 6 | Probes |
| 7 | Polymerase |
| 8 | Matrix forming agent |

The conduit structure is at the bottom of the structured polycarbonate plate and is sealed with double-sided PCR sheet and an unstructured plate. The chip is here contacted with a silicone conduit having an inner diameter of 2.1 mm and an outer diameter of 4 mm. For the experimental procedure, the peristaltic pump "Peristaltic Pump P-1" from Pharmacia Fine Chemicals was used. With the Peristaltic Pump P-1 flow velocities of about 1 ml / h to approximately 500 ml / h depending on the choice of the conduit inside diameter can be obtained, the pumping speed is infinitely adjustable. The conduit structure was observed with a microscope at a magnification of 2 to 4. For the dissolution of the various lyophilizates the following experimental parameters were chosen:

| | |
|---|---|
| Solvent: | HPLC-water |
| Volume of solvent: | 20 µl |
| Pumpingrate: | 2.6 µl/s |

HPLC water was used as solvent because this is usually used when preparing reagents in biochemistry.

It can be noted that with increasing chamber size the flow through of the device of the first embodiment according to the invention increased in height on the one hand and on the other hand an increased potential for chaotic flow was observed.

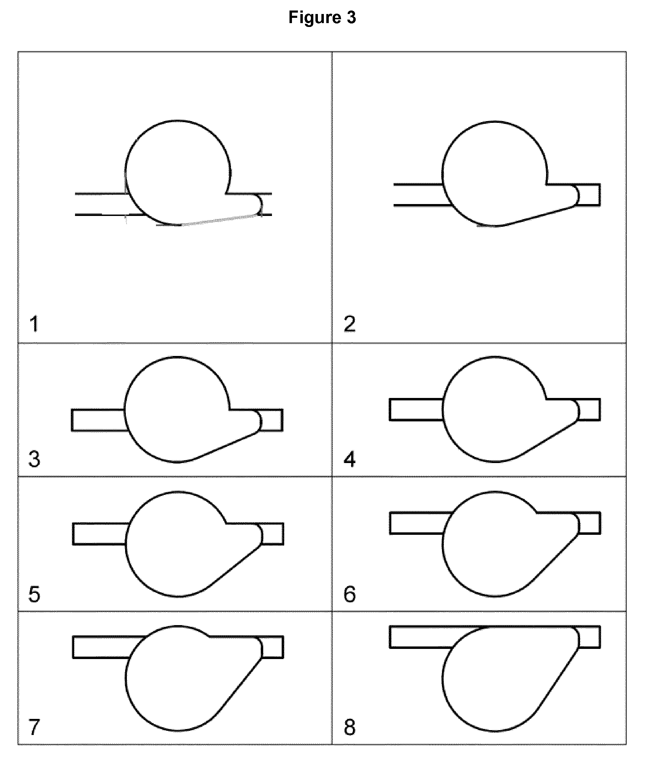

Fig. 2 and Fig. 3 show a second embodiment of a device for separating bubbles from a fluid according to the invention. In a plan view the device of the second embodiment according to the invention is a circular shape with a diameter of 2.5 mm and a conduit with a cross sectional diameter of 0.7 mm which intersects the circular shape tangential. Thereafter, the conduit is shifted by 0.25 mm upwards and the circular shape is connected with the lower contour of the conduit tangentially, so that a nozzle is formed. This procedure is provided in geometry 1 of Fig. 3. For the second geometry, the conduit is again shifted upwards by 0.25 mm. Because the tip of the nozzle is fixed to the conduit, the angle of opening of the nozzle will also change. This scheme is continued until geometry 8 of Fig. 3. The basic idea of this strategy is that it is predominantly the nozzle which causes the gas bubbles-retaining effect in the second embodiment of a device according to the invention. The further experiments were carried out in the same manner as described above

As a result, it can be stated that the first chamber geometry shows a pronounced region with a low flow velocity above the curve. Due to the migration of the conduit toward the chamber center, these low flow velocities get smaller and do no longer occur at the fifth geometry. The chamber is flowed through increasingly more evenly. In the first chamber geometry a vortex in the rounding of the second embodiment of a device according to the invention is formed and the chamber is completely flowed through in height. In the third and fourth geometry these vortexes no longer occur and the chamber is no longer flowed through in the upper quarter. Additionally it can be observed starting from the fifth chamber geometry that the chamber is increasingly less flowed through in its width. In the evaluation of the experiment, it was found that all the chamber geometries retained the gas bubbles similar effectively.

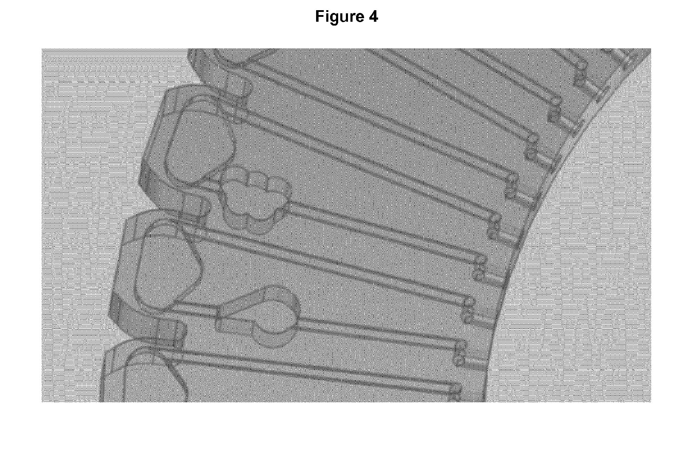

Fig. 4 shows the first and the second embodiment of a device according to the invention arranged in a lap-on-a-chip system. The chambers according to the first and second embodiment of a device according to the invention are located directly before the PCR chamber. The gas bubbles retaining effect of the first and second embodiment is used for an optimal carrying out of the PCR. Since the chambers of the invention separate the gas bubbles from the effusing fluid, no bubbles enter the PCR chamber. Thus, an optimal functioning of the PCR is guaranteed.

## Claims

1. A device for separating bubbles from a fluid comprising a chamber (1), an afferent conduit (2) and an efferent conduit (3) guiding a fluid through said chamber (1), **characterized in that** the inner chamber wall has a geometry that generates within said chamber (1) a continuous flow and at least one area with a discontinuous flow, so that in the area of the discontinuous flow bubbles remain at the inner chamber wall and thus are separated from the fluid effusing from the chamber (1).

2. The device according to claim 1, **characterized in that** the flow within the chamber generates areas of distinct flow velocities encompassing at least one area with a high flow velocity and at least one area with a low flow velocity, whereas the ratio of the flow velocity of the high flow velocity and the low flow velocity is at least 2:1.

3. The device according to one of the above claims, **characterized in, that** the area of high flow velocity and the at least one area with a low flow velocity are adjacent to each other.

4. The device according to claim 3, **characterized in that** the high flow velocity is at least 5 mm/s, preferably at least 10 mm/s and most preferably at least 20 mm/s.

5. The device according to claim 3 or 4, characterized that the low flow velocity is not more than 5 mm/s, preferably not more than 1 mm/s and most preferably not more than 0.5 mm/s.

6. The device according to one of the above claims, **characterized in that** the discontinuous flow comprises a chaotic flow or turbulences.

7. The device according to one of the above claims, **characterized in that** the discontinuous flow comprises at least one region of dead water.

8. The device according to one of the above claims, **characterized in that** the chamber comprises in a plan view at least one circular shape, wherein the at least one circular shape has a radius from 0.5 to 2 mm.

9. The device according to one of the above claims, **characterized in that** the inner wall of the chamber, starting from the afferent conduit, has at least one convex bulge.

10. The device according to one of the above claims, **characterized in that** the chamber comprises in a three-dimensional view at least one section which is based on non-linear bodies.

11. The device according to one of the above claims, **characterized in that** the ratio of the chamber diameter to channel diameter in a cross sectional view perpendicular to the continuous flow is at least 4:1, more preferably at least 5:1, more preferably at least 6:1 and most preferably at least 7:1.

12. The device according to one of the above claims, **characterized in that** a difference in velocity Δv is obtained in a distance Δx which leads to a ratio of the difference of velocity and the difference of distance Δv/Δx is in the region between 10 mms⁻¹ / mm and 20 mms⁻¹ / mm.

13. The device according to one of the above claims, **characterized in that** the chamber contains a lyophilizate.

14. The device according to one of the above claims, **characterized in that** the chamber is part of a lab-on-a-chip system.

15. The device according to one of the above claims, **characterized in that** the device is a disposable.

16. Use of a chamber for separating bubbles from a fluid, **characterized in that** the inner chamber wall has a geometry that generates within said chamber a continuous flow and at least one area with a discontinuous flow, so that in the area of the discontinuous flow bubbles remain at the inner chamber wall and thus are separated from the fluid effusing from the chamber.

17. A fluidic, in particular microfluidic, system comprising a chamber, an afferent conduit and an efferent conduit guiding a fluid through said chamber, **characterized in that** the inner chamber wall has a geometry that generates within said chamber a continuous flow and at least one area with a discontinuous flow, so that in the area of the discontinuous flow bubbles remain at the inner chamber wall and thus are separated from the fluid effusing from the chamber.

18. Method for separating bubbles from a fluidic sample, comprising the following steps:
a) transferring the fluidic sample through a bubble trap which is connected to an analyzing device,
b) forming a continuous flow and at least one area with a discontinuous flow of the sample in the bubble trap,
c) retaining bubbles from the sample flowing out the bubble trap by absorbing the bubbles at the inner wall of the bubble trap in the area of the discontinuous flow.
